# EUROPEAN PATENT APPLICATION

(11) **EP 4 775 024 A1**
(43) Date of publication of application: **15.07.2026**
(21) Application number: 24861869.6
(22) Date of filing: 27.08.2024
(51) Int. Cl.: A01G 3/08

(54) **GARDEN TOOL**

(30) Priority: 06.09.2023 CN 202322427358 U
(71) Applicant: Greenworks (Jiangsu) Co., Ltd, Changzhou, Jiangsu 213023 (CN)
(72) Inventor: ZHOU, Erbiao, Changzhou, Jiangsu 213023 (CN); YU, Xinxin, Changzhou, Jiangsu 213023 (CN); ZHANG, Lingao, Changzhou, Jiangsu 213023 (CN)
(74) Representative: Bergenstråhle & Partners AB
(86) International application number: PCT/CN2024/114820
(87) International publication number: WO 2025/051025

(57) **Abstract**

A garden tool includes: a connecting rod assembly, a main body and a sawing assembly. The main body is mounted to one end of the connecting rod assembly, the main body includes a housing, a driving assembly and an oil supply assembly. The housing defines the oil storage cavity and the mounting groove adjacent to the oil storage cavity. The driving assembly is disposed in the mounting groove. The oil supply assembly is mounted on the housing and operably coupled to the driving assembly, the oil supply assembly is configured to draw lubricating oil from the oil storage cavity and deliver the lubricating oil to a lubricated portion of the garden tool, and the sawing assembly is mounted on the housing and is operably coupled to the driving assembly.

## Description

### TECHNICAL FIELD

The disclosure relates to a field of garden tools, in particular to a garden tool.

### BACKGROUND

ln a trimming process of the garden fruit tree, it is often subjected to the trimming operation of high branches, so that the rod saw garden tool is widely used, and the operator can control the saw cutting part of the rod saw garden tool to trim at high altitude on the ground.

In the conventional rod saw garden tools on the market, the oil storage part and the driving part are arranged separately, and the arrangement is not reasonable enough, so that the device is large and bulky, and the external oil conveying tube is required after being arranged separately, which will also affect the flexibility of the rod saw, thereby reducing the control force of the operator on the rod saw. In addition, the separate driving part can only dissipate heat through the external environment, and the heat dissipation effect is poor, so it is necessary to provide a garden tool to solve the above problems.

### SUMMARY

In view of the above disadvantages, the present invention provides a rod saw to solve the technical problem that the body part of the existing rod saw garden tool responsible for sawing is large and bulky.

One or more embodiments of the disclosure provide a garden tool, including: a connecting rod assembly, a main body and a sawing assembly. The main body is mounted to one end of the connecting rod assembly, the main body includes a housing, a driving assembly and an oil supply assembly. The house defines the oil storage cavity and the mounting groove adjacent to the oil storage cavity. The driving assembly is disposed in the mounting groove. The oil supply assembly is mounted on the housing and operably coupled to the driving assembly, the oil supply assembly is configured to draw lubricating oil from the oil storage cavity and deliver the lubricating oil to a lubricated portion of the garden tool, and the sawing assembly is mounted on the housing and is operably coupled to the driving assembly.

In an embodiment of the garden tool of the disclosure, the housing includes a first housing, a second housing and a third housing, the mounting groove is provided on the first housing, the second housing is coupled to the first housing to define the oil storage cavity, and the third housing is coupled to the first housing on a side opposite the second housing and cooperates with the first housing to define a driving cavity.

In an embodiment of the garden tool of the disclosure, the oil supply assembly includes an oil inlet and an oil outlet, the oil inlet and the oil outlet are integrally formed with the first housing, the oil inlet is located in the oil storage cavity, the oil outlet is located outside the first housing, and the oil supply assembly draws lubricating oil from the oil storage cavity and delivers the lubricating oil to the portion to be lubricated through the oil inlet and the oil outlet.

In an embodiment of the garden tool of the disclosure, the driving assembly includes a driving motor, a first end of an output shaft of the driving motor extends through a bottom wall of the mounting groove and the third housing, a portion of the first end located in the driving cavity is rotatably coupled to the oil supply assembly, and an end portion of the first end located outside the third housing is rotatably coupled to the sawing assembly.

In an embodiment of the garden tool of the disclosure, the third housing defines an output hole, the output shaft extends through the third housing via the output hole, a dust-proof assembly is arranged inside the output hole, and the dust-proof assembly cooperates with the output shaft.

In an embodiment of the garden tool of the disclosure, the dust-proof assembly includes a dust-proof pad and a mounting base, the mounting base is fixedly mounted inside the output hole, the dust-proof pad is fixedly mounted on the mounting base, and the dust-proof pad is configured to fill a gap between the output hole and the output shaft.

In an embodiment of the garden tool of the disclosure, an air guiding cover is detachably mounted on the first housing, and the air guiding cover is engaged with an opening of the mounting groove, the air guiding cover includes an air guiding window, a plurality of heat dissipation fan blades is disposed at a second end of the output shaft, and an air outlet of the air guiding window is parallel to a rotation plane of the plurality of heat dissipation fan blades.

In an embodiment of the garden tool of the disclosure, the air guiding window is an involute air guiding window.

In an embodiment of the garden tool of the disclosure, an air inlet cavity is further arranged in the first housing, the air inlet cavity is located on a side of the mounting groove away from the oil storage cavity, the air inlet cavity is communicated with the mounting groove through the driving cavity, and a first air inlet is disposed on a wall of the air inlet cavity away from the driving cavity.

In an embodiment of the garden tool of the disclosure, the one end of the connecting rod assembly is secured to the first housing, the connecting rod assembly includes a telescopic rod, a hollow rod cavity is arranged in the telescopic rod, the rod cavity is communicated with the air inlet cavity, and a second air inlet is disposed on a side wall of the telescopic rod.

In an embodiment of the garden tool of the disclosure, a part of the sawing assembly connected to the main body includes a protective cover, and the protective cover includes a guiding plate.

In an embodiment of the garden tool of the disclosure, the second housing includes an oil cover and a viewing window.

In the garden tool of the disclosure, a structure of the main body is compact, the oil storage cavity, the driving assembly, the oil supply assembly and the like are integrated together, which reduces a volume and weight of the main body, increases control flexibility, facilitates use, reduces a number of unnecessary parts and production cost. At the same time, a design in which the oil storage cavity and the driving assembly are adjacent provides an oil cooling effect for the driving assembly, resulting in improved operational sustainability of the main body.

### BRIEF DESCRIPTION OF THE DRAWINGS

In order to explain technical solutions of embodiments of the disclosure more clearly, the following will briefly introduce drawings used in a description of the embodiments or the conventional art. Obviously, the drawings in the following description are only some embodiments of the disclosure. For those of ordinary skill in the art, other drawings may be obtained based on these drawings without creative work.
FIG. 1 is a schematic structural view of an overall structure of a garden tool according to at least one embodiment of the disclosure.
**FIG.** 2 is a schematic structural view of a main body of a garden tool according to at least one embodiment of the disclosure.
FIG. 3 is a front view of a first housing of a garden tool according to at least one embodiment of the disclosure.
FIG**.** 4 is a rear view of a first housing of a garden tool according to at least one embodiment of the disclosure.
FIG. 5 is an enlarged view of area A in FIG. 1 of the disclosure.
FIG. 6 is a schematic structural view of a driving assembly of a garden tool according to at least one embodiment of the disclosure.
FIG. 7 is a schematic connection view of a driving assembly and an oil supply assembly of a garden tool according to at least one embodiment of the disclosure.
FIG. 8 is a schematic view of an mounting state of a protective cover of a garden tool according to at least one embodiment of the disclosure.
FIG. 9 is a schematic structural view of a third housing of a garden tool according to at least one embodiment of the disclosure.
FIG. 10 is a schematic structural view of a air guiding cover of a garden tool according to at least one embodiment of the disclosure.
FIG. 11 is a schematic structural view of a main body of a garden tool according to another embodiment of the disclosure.
FIG. 12 is an internal structural cross-sectional view of a main body of a garden tool according to at least one embodiment of the disclosure.
FIG. 13 is a schematic view of relative positions of cavities of a garden tool according to at least one embodiment of the disclosure.

### PART NUMBER DESCRIPTION

001 connecting rod assembly
010 second air inlet
002 main body
020 housing
003 sawing assembly
004 control device
100 first housing
110 oil storage cavity
120 mounting groove
121 ventilation hole
130 air inlet cavity
140 first air inlet
150 fixing part
160 hook
200 second housing
210 oil cover
300 third housing
310 output hole
320 fixing teeth
321 dust-proof pad
330 driving cavity
400 air guiding cover
410 air guiding window
500 driving assembly
510 output shaft
511 first end
512 second end
513 worm
520 heat dissipation fan blade
600 oil supply assembly
610 oil inlet
620 oil outlet
630 rotating shaft
631 worm gear
700 protective cover
710 guiding plate

### DETAILED DESCRIPTION

The following describes the implementation of the disclosure through specific embodiments, and those skilled in the art can easily understand other advantages and effects of the disclosure from the content disclosed in this specification. The disclosure may also be implemented or applied through other different specific embodiments. Various details in this specification may also be modified or changed based on different viewpoints and applications without departing from the disclosure. It may be noted that, the following embodiments and the features in the embodiments can be combined with each other without conflict. It may further be understood that the terms used in the examples of the disclosure are used to describe specific embodiments, instead of limiting the protection scope of the disclosure. The test methods that do not indicate specific conditions in the following examples are usually in accordance with conventional conditions, or conditions recommended by each manufacturer.

When an embodiment gives a range of values, it may be understood that, unless otherwise specified in the disclosure, two endpoints of each range of values and any one of the values between the two endpoints may be selected. Unless otherwise defined, all technical and scientific terms used in the disclosure and the conventional art mastered by a person skilled in the art and a description of the disclosure may also be realized by using any method, equipment and material similar to or equivalent to the conventional art described in the embodiments of the disclosure.

It may be noted that terms "upper", "lower", "left", "right", "middle" and "one" quoted in this specification are only for a convenience of description, and are not used to limit a scope of the disclosure. Changes or adjustments in their relative relationships shall also be regarded to be within the scope of the disclosure when there is no substantial change in the technical content.

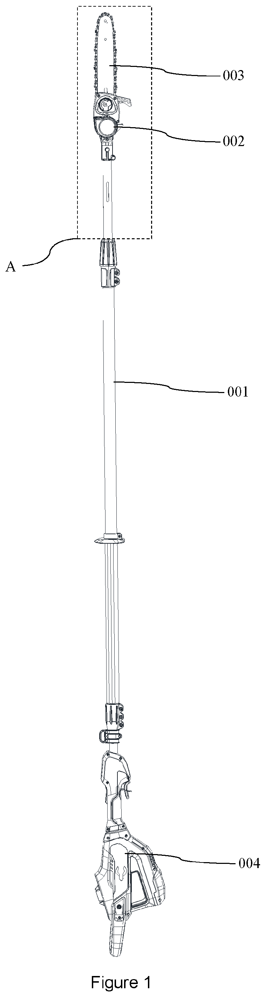

Please refer to FIG. 1 through FIG. 13. In a garden tool of the disclosure, through reasonably configuring a structure of a main body 002, functions of the main body 002 are integrated together, and the main body 002 has a smaller volume, a lighter weight and fewer parts, which not only reduces production cost, but also reasonably uses oil of an oil storage cavity 110 to provide oil cooling for a driving assembly 500, thereby increasing a continuity of work of the main body 002.

Please refer to FIG. 1. FIG. 1 is a schematic diagram of an overall structure of the garden tool according to an embodiment of the disclosure. The disclosure provides the garden tool, and the garden tool includes: a connecting rod 001 assembly, a main body 002 and a sawing assembly 003. The main body 002 is mounted to one end of the connecting rod assembly 001, and an operator may control the main body 002 to work at a certain height by holding one end of the connecting rod assembly 001 away from the main body 002. The end of the connecting rod assembly 001 away from the main body 002 may also include a control device 004 for conveniently controlling the main body 002 and an energy device for supplying energy to the control device 004 and the main body 002. In order to reduce a weight of the garden tool and facilitate a handheld operation of the operator, the energy device may be operated separately from the control device 004.

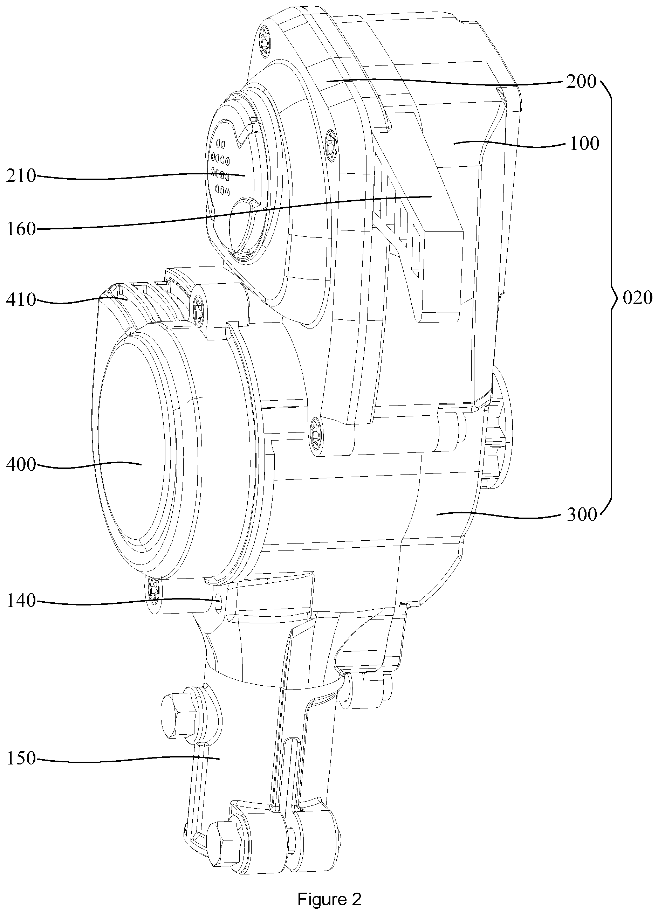

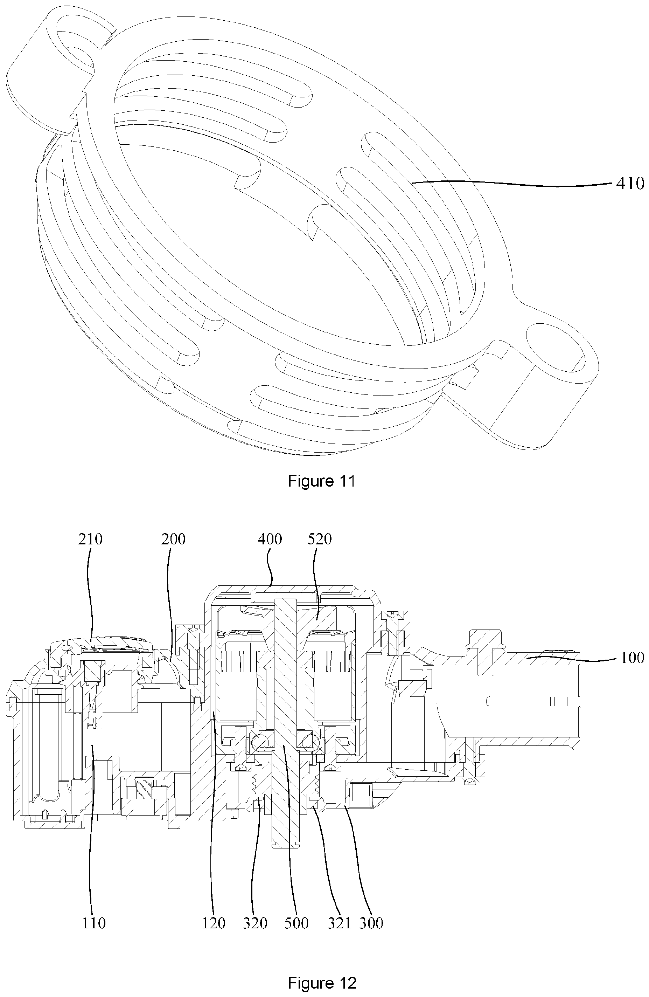

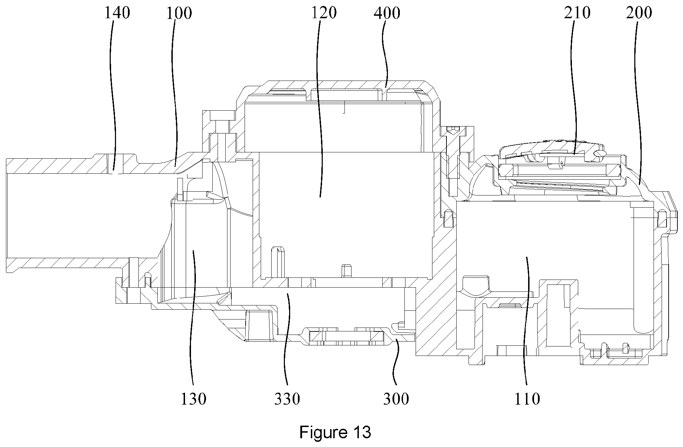

Please refer to FIG. 2, FIG. 12 and FIG. 13. FIG. 2 is a schematic structural view of the main body in an embodiment of the garden tool of the disclosure. FIG. 12 is a cross-sectional view of an internal structure of the main body in another embodiment of the garden tool of the disclosure. And FIG. 13 is a schematic view of relative positions of cavities in another embodiment of the garden tool of the disclosure. The main body 002 includes a housing 020, a driving assembly 500 and an oil supply assembly 600. The housing defines the oil storage cavity 110 and a mounting groove 120 adjacent to the oil storage cavity 110, and the driving assembly 500 is disposed in the mounting groove 120. The oil storage cavity 110 is used to store the oil lubricated for the sawing assembly 003. The oil storage cavity 110 and the driving assembly 500 are integrated in the housing 020 of the main body 002, so that on one hand, a structure of the garden tool is more compact, and no additional oil storage device is required, thereby reducing a weight of the whole machine, on the other hand, since the oil storage cavity 110 and the mounting groove 120 are arranged adjacently, lubricating oil in the oil storage cavity 110 further has a certain heat dissipation effect on the driving assembly 500.

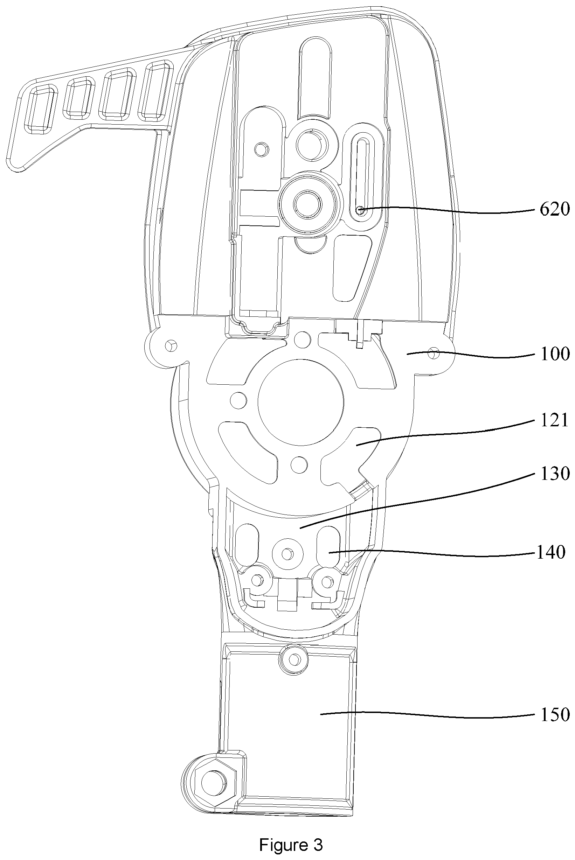

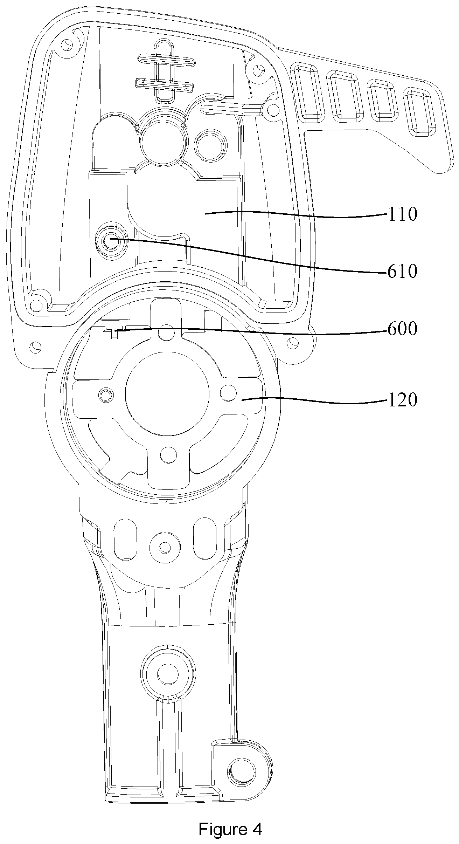

Please refer to FIG. 3 and FIG. 4. FIG. 3 is a front view of a first housing in an embodiment of the garden tool of the disclosure, and FIG. 4 is a rear view of the first housing in the embodiment of the garden tool of the disclosure. The oil supply assembly 600 is mounted on the housing 020, an oil inlet 610 of the oil supply assembly 600 is in communication with the oil storage cavity 110, and the oil outlet 620 of the oil supply assembly 600 is located outside the housing 020. The oil supply assembly 600 is driven by the driving assembly 500 to draw the lubricating oil from the oil storage cavity 110 and deliver the lubricating oil to a lubricated portion of the garden tool. In this embodiment, the oil supply assembly 600 is an oil pump, and the oil in the oil storage cavity 110 flows to the sawing assembly 003 through the oil pump, which replaces a traditional oil supply pipeline, simplifies an internal design of the main body 002, and makes the structure more compact. The sawing assembly 003 is fixedly mounted on one side of the oil outlet 620 on the housing 020 and includes a rotatable cutting blade. The cutting blade is mounted on a driving shaft of the driving assembly 500 and is driven by the driving assembly 500 to cut. The driving assembly 500 includes, but is not particularly limited, a fuel engine, a driving motor, etc. The driving assembly 500 further drives the oil supply assembly 600 to supply oil to the sawing assembly 003. It may be noted that structures and connection manners that are not specifically described in this disclosure are the conventional art, and may also be obtained through general commercial means, and details are not described herein again.

Please refer to FIG. 1 through FIG. 4. In an embodiment of the garden tool of the disclosure, the housing 020 includes the first housing 100, a second housing 200 and a third housing 300 assembled together. The first housing 100, the second housing 200 and the third housing 300 are combined to form the oil storage cavity 110 and the mounting groove 120. Materials of the first housing 100, the second housing 200, and the third housing 300 is not particularly limited. In this embodiment, the first housing 100, the second housing 200, and the third housing 300 are all made of metal aluminum, which can achieve both portability and strength. The mounting groove 120 is provided on the first housing 100, the oil supply assembly 600 is mounted on the housing 020, and the second housing 200 is coupled to the first housing 100 to define the oil storage cavity 110. In this way, a part of the first housing is used as the oil storage cavity 110, and there is no need to mount an independent oil pot, which simplifies the structure of the main body 002, and meanwhile, the lubricating oil in the oil storage cavity 110 is in direct contact with the first housing 100, which facilitates heat dissipation for the driving assembly 500 mounted in the mounting groove 120. The first housing 100 includes a fixing part 150 for fixedly mounting the main body 002 on the connecting rod assembly 001. In this disclosure, the driving assembly 500, the oil storage cavity 110, and the oil supply assembly 600 are integrally mounted on the first housing 100, and at the same time the first housing 100 is fixedly coupled to the connecting rod assembly 001 and the sawing assembly 003 is fixed on the first housing 100. In this way, the first housing 100 is used as a main body, and a plurality of components are integrally mounted, so that a weight of an entire device may be effectively reduced, and the lubricating oil in the oil storage cavity further has an effect of dissipating heat from the sawing assembly 003.

Please refer to FIG. 1 through FIG. 4. A sealing gasket is arranged between the first housing 100 and the second housing 200 to ensure a sealing performance of the oil storage cavity 110, and the sealing gasket includes a fool-proof structure to avoid a reverse assembly during assembly. The third housing 300 is coupled on a corresponding area of the mounting groove 120 on a side of the first housing 100 opposite the second housing 200, and cooperates with the first housing 100 to define a driving cavity 330. A hook 160 is arranged on a side surface of the first housing 100, and when the garden tool is placed, the hook 160 is hung at a position such as a branch and a trunk, to prevent toppling and avoid damage to the garden tool or safety hazards. The third housing 300 and a bottom wall of the mounting groove 120 jointly form the driving cavity 330. One end of a rotating shaft 630 of the oil pump is located in the driving cavity 330, and an output shaft 510 of the driving assembly 500 extends into the driving cavity 330 and is rotatably coupled to the rotating shaft 630 of the oil pump, so as to drive the oil pump to rotate and realize an oil supply lubrication for the sawing assembly 003. The oil pump is directly press-fitted on the first housing 100 and cooperates with the oil inlet 610 and the oil outlet 620, so that the lubricating oil enters the oil inlet 610 from the oil storage cavity 110 and then flows out from the oil outlet 620 to a part to be lubricated of the sawing assembly 003. In this way, there is no need to additionally fix the oil pump, which not only simplifies the structure of the entire main body 002, but also ensures a stability of the oil pump. The oil outlet 620 is directly arranged on the first housing 100, which eliminates a use of the traditional oil outlet tube and further simplifies the structure of the main body 002. A plurality of ventilation holes 121 is further disposed on the bottom wall of the mounting groove 120, and a shape of the ventilation hole 121 may not be limited. Airflow enters the mounting groove 120 through the ventilation hole 121 to bring heat of the driving assembly 500 out through the air guiding window 410.

Please refer to FIG. 3 and FIG. 4. In an embodiment of the garden tool of the disclosure, the oil supply assembly 600 includes an oil inlet 610 and an oil outlet 620, the oil inlet 610 and the oil outlet 620 are integrally formed with the first housing 100, and the oil inlet 610 is in communication with the oil outlet 620. The oil inlet 610 is located in the oil storage cavity 110, and the oil outlet 620 is located outside the first housing 100. The oil pump is located in a connection passage between the oil inlet 610 and the oil outlet 620, and the oil pump controls the lubricating oil in the oil storage cavity 110 to flow to the part to be lubricated of the sawing assembly 003 through the oil inlet 610 and the oil outlet 620.

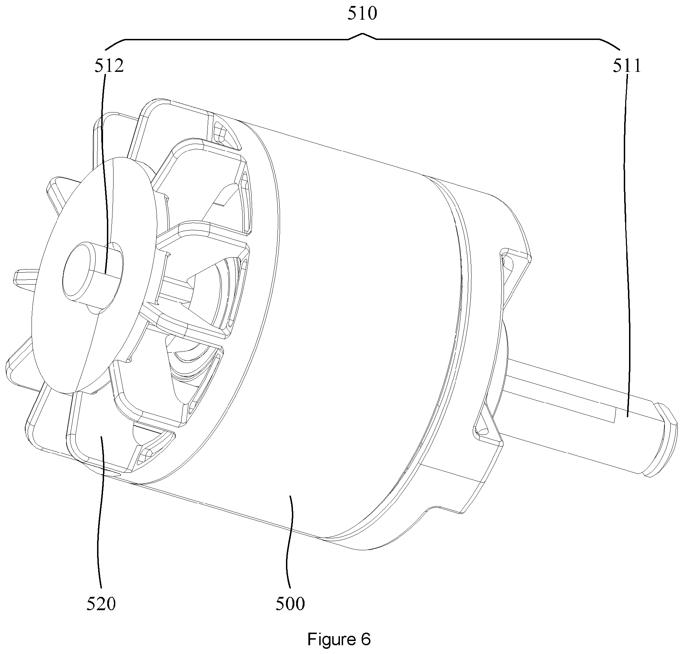

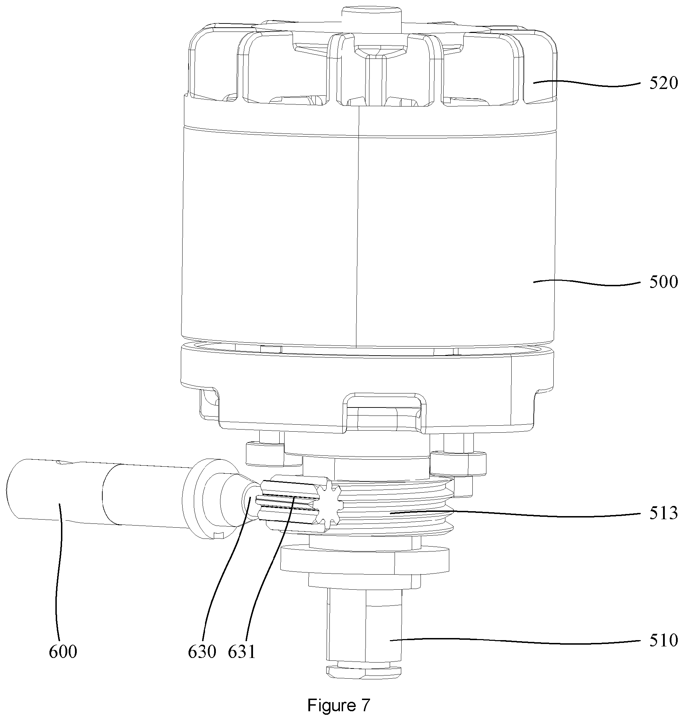

Please refer to FIG. 1, FIG. 2, FIG. 6 and FIG. 7. FIG. 6 is a schematic structural view of a driving assembly in an embodiment of the garden tool of the disclosure, and FIG. 7 is a schematic connection view of the driving assembly and the oil supply assembly in an embodiment of the garden tool of the disclosure. In an embodiment of the garden tool of the disclosure, the driving assembly 500 includes a driving motor, and the driving motor is more environmentally friendly and has lower energy consumption than a fuel engine. A first end 511 of the output shaft 510 of the driving motor extends through the bottom wall of the mounting groove 120 and the third housing 300. A portion of the first end 511 that is located in the driving cavity 330 of the third housing 300 is rotatably coupled to the oil supply assembly 600, and the rotating shaft 630 of the oil pump and the output shaft 510 of the driving motor implement rotatably connected power transmission in a gear meshing manner. The gear meshing manner may not be limited, and in this embodiment, a worm gear 631 is disposed at an end part of the rotating shaft 630 of the oil pump, and the output shaft 510 of the driving assembly 500 includes a worm 513 meshed with the worm gear 631(as shown in FIG. 7). An end portion of the first end 511 located outside the third housing 300 is rotatably coupled to the sawing assembly 003 to implement a cutting function of the sawing assembly 003.

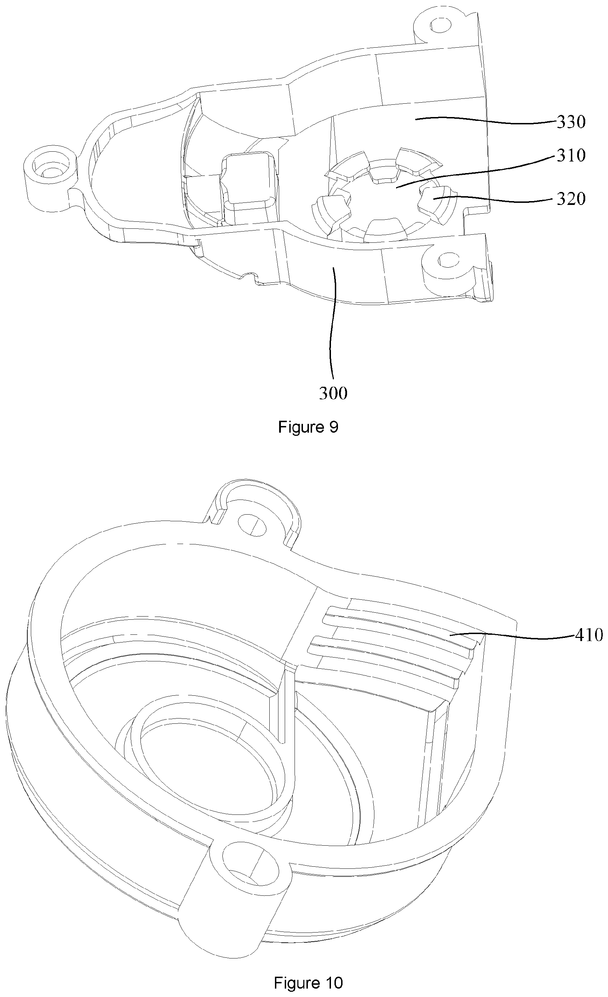

Please refer to FIG. 2, FIG. 9 and FIG. 12. FIG. 9 is a schematic structural view of the third housing in an embodiment of the garden tool of the disclosure. In an embodiment of the garden tool of the disclosure, the third housing 300 defines an output hole 310, and the output shaft 510 extends through the third housing 300 through the output hole 310. Since saw debris is easy to be rolled into the output hole 310 during a gardening operation of the sawing assembly 003, the sawing debris enters the housing 020, which easily causes equipment failure. Therefore, a dust-proof assembly is arranged in a gap between the output hole 310 and the output shaft 310, the dust-proof assembly includes a dust-proof pad 321, and the dust-proof pad 321 cooperates with the output shaft 510. This is to block the saw debris or other debris outside the housing. In this embodiment, a mounting base is disposed at an end of the output hole 310 close to the driving cavity 330, and the dust-proof pad 321 is mounted on the mounting base, which facilitates a replacement of the dust-proof pad 321. The mounting base includes a plurality of fixing teeth 320, the plurality of fixing teeth 320 is divided into two groups, the fixing teeth 320 of each group are distributed along a circumferential direction of the dust-proof pad 321, and the two groups of fixing teeth 320 respectively act on two axial end surfaces of the dust-proof pad 321, thereby fixing the dust-proof pad. At the same time, the housing 020 of this embodiment is formed by casting, and in order to facilitate demolding, the two groups of fixing teeth 320 are staggered in an axial direction of the output hole, thereby facilitating a removal of the mold located in an area between the two groups of fixing teeth 320.

Please refer to FIG. 2 and FIG. 4. In an example of the garden tool of the disclosure, an air guiding cover 400 is detachably mounted on the first housing 100, the mounting groove 120 includes an opening for removing and mounting the driving assembly 500, and the air guiding cover 400 is engaged with the opening of the mounting groove 120 for protecting heat dissipation fan blades 520. The air guiding cover 400 is detachable and replaceable to adapt to driving assemblies 500 of different specifications. The air guiding cover 400 includes an air guiding window 410. A shape, size, and number of the air guiding windows 410 may not be limited, but could match an airflow volume of the heat dissipation fan blades 520.

Please refer to FIG. 6, in an embodiment of the garden tool of the disclosure, a plurality of the heat dissipation fan blades 520 is disposed at a second end 512 of the output shaft 510. The plurality of heat dissipation fan blades 520 rotates along with the output shaft 510, so that heat generated by the driving motor is removed in time, and a frequent high-temperature protection of the driving motor is avoided. A type of the plurality of heat dissipation fan blades 520 may not be limited, and the plurality of heat dissipation fan blades 520 may be of a straight blowing type (an air inlet direction is parallel to a blowing direction) or a side blowing type (the air inlet direction is perpendicular to the blowing direction). In this embodiment, the heat dissipation blades 520 with the side blowing type are more suitable for air extraction, an air pressure is larger than that of the straight blowing type, and the heat dissipation effect is better.

Please refer to FIG. 2 and FIG. 10. FIG. 10 is a schematic structural view of the air guiding cover in an embodiment of the garden tool of the disclosure. In an embodiment of the garden tool of the disclosure, the air guiding window 410 is located in a circumferential direction of the plurality of heat dissipation fan blades 520. The air guiding window 410 is located in the blowing direction of the plurality of heat dissipation fan blades 520, so that the airflow blown by the plurality of heat dissipation fan blades 520 can be directly discharged from an inside of the housing 020 through the air guiding window 410. In this embodiment, the air guiding cover 400 is an involute air guiding cover (as shown in FIG. 10), the involute air guiding cover includes the air guiding window 410, a wall of the involute air guiding cover restricts the airflow to the air guiding window 410 to be discharged, and by selecting the air guiding window 410 with different opening orientations relative to an mounting position on the involute air guide cover, an airflow direction discharged by the air guiding window 410 can avoid the operator, which avoids blowing hot airflow to the operator or rolling the debris to the operator. In addition, the closer a cross section of the air passage of the gradually opened air guiding window 410 to an external area is, the larger the cross section of the air passage out, the faster the cooling is, and the better the heat dissipation effect is when the airflow flows out. Please refer to FIG. 11. FIG. 11 is a schematic structural view of the air guiding cover in another embodiment of the garden tool of the disclosure. In another embodiment, there are a plurality of air guiding windows 410, and the air outlets of the plurality of air guiding windows 410 are parallel to a rotation plane of the heat dissipation blades 520, which also improves the heat dissipation effect, the structure is simple and manufacturing cost is relatively low.

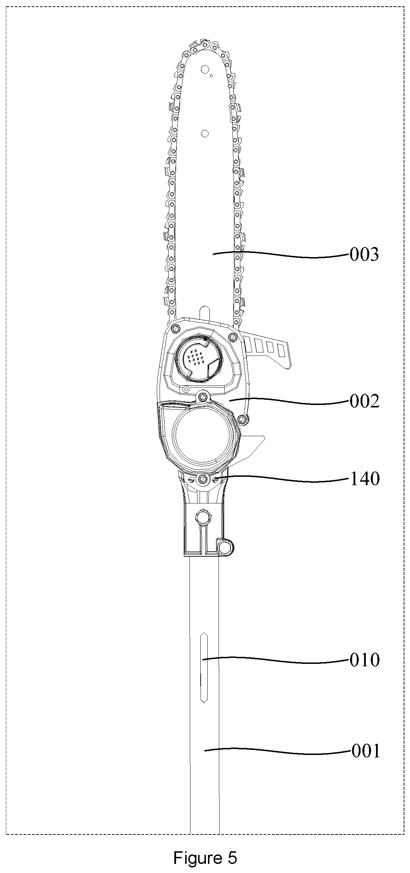

Please refer to FIG. 3, FIG. 5 and FIG. 12. FIG. 5 is an enlarged view of area A in FIG. 1, and FIG. 12 is a schematic view of the relative positions of the cavities in another embodiment of the garden tool of the disclosure. In an embodiment of the garden tool of the disclosure, an air inlet cavity 130 is further arranged in the first housing 100, the air inlet cavity 130 is located on a side of the mounting groove 120 away from the oil storage cavity 110, the air inlet cavity 130 is communicated with the mounting groove 120 through the driving cavity 330, and a first air inlet 140 is disposed on a wall of the air inlet cavity 130 away from the driving cavity 330. The air inlet cavity 130, the driving cavity 330 and the mounting groove 120 form an air flow passage, the air enters the air flow passage from the first air inlet 140, and the heat of the driving assembly 500 is brought out from the air guiding window 410 under an action of the plurality of heat dissipation fan blades 520.

Please refer to FIG. 1 and FIG. 5. In an embodiment of the garden tool of the disclosure, one end of the connecting rod assembly 001 is secured to the first housing 100, the connecting rod assembly 001 includes a telescopic rod, and a length of the telescopic rod may be adjusted according to different operating heights. A hollow rod cavity is arranged in the telescopic rod, the rod cavity is communicated with the air inlet cavity 130, and a second air inlet 010 is disposed on a side wall of the telescopic rod. When the first air inlet 140 is blocked, the second air inlet 010 may still ensure that enough air enters the main body 002 to assist in heat dissipation. The rod cavity may also be used to arrange connection lines of the main body 002, the sawing assembly 003 and the control device 004.

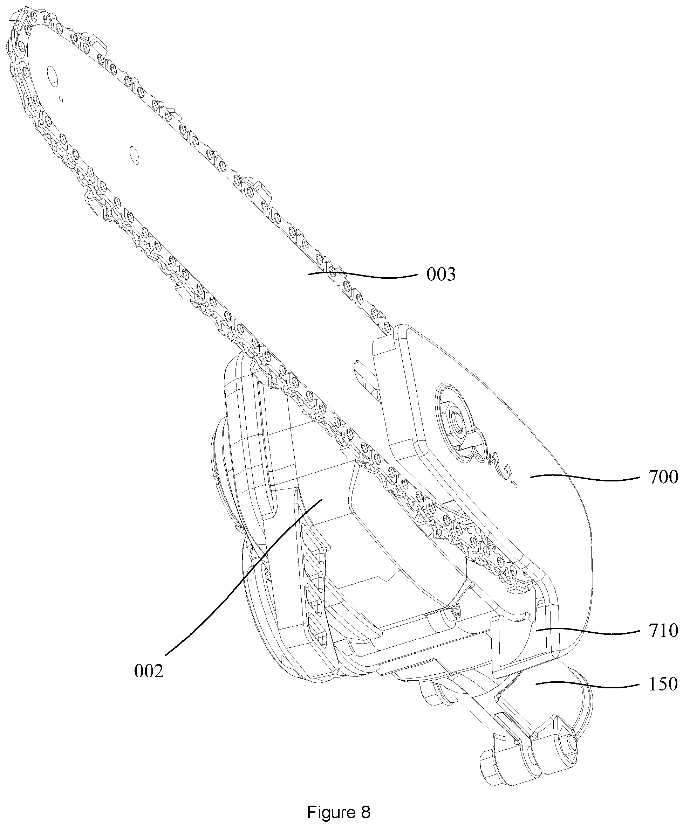

Please refer to FIG. 8. FIG. 8 is a schematic view of a mounting state of a protective cover in an embodiment of a garden tool of the disclosure. In an embodiment of the garden tool of the disclosure, a protective cover 700 is disposed on a part of the sawing assembly 003 coupled to the main body 002, and the protective cover 700 includes a guiding plate 710. The guiding plate 710 is located at an edge of one end of the protective cover 700 facing the fixing part 150, and the guiding plate 710 is arc-shaped to match an edge of the protective cover 700 facing the fixing part. Since during a sawing process, the debris is driven by the sawing assembly 600 to be thrown along a circumferential direction of a rotation of the sawing assembly 600, the guiding plate 710 may be used to block the sawing debris from being rolled to the operator, and guide a throwing direction of the sawing debris to be a direction away from the operator.

Please refer to FIG. 2. In an embodiment of the garden tool of the disclosure, the second housing 200 includes an oil cover 210 and a window (not shown). The oil storage cavity 110 is filled with oil through the oil cap 210 to avoid connecting an oil pipeline and increase a flexibility of the device. The window is transparent to facilitate an observation of an amount of the oil in the oil storage cavity 110. The window may also be arranged on the oil cover 210 to ensure a sealing performance of the wall of the housing 020 corresponding to the oil storage cavity 110.

The garden tool of the disclosure has a compact structure of the main body, and the oil storage cavity, the driving assembly, the oil supply assembly and the like are integrated together, which reduces a volume and a weight of the main body, increases a control flexibility, and an integrated arrangement also reduces a number of unnecessary parts and reduces production cost. At the same time, a design in which the oil storage cavity and the driving assembly are adjacent provides an oil cooling effect for the driving assembly, resulting in improved operational sustainability of the main body, enhanced user-friendliness, and reduced negative impacts on operators such as debris, heat, and physical strain. Therefore, the disclosure effectively overcomes some practical problems in the conventional art, thereby having high utilization value and use significance. The above embodiments only illustrate principles and effects of the disclosure, but are not intended to limit the disclosure. Anyone familiar with this technology may modify or change the above embodiments without departing from a scope of the disclosure. Therefore, all equivalent modifications or changes made by those with ordinary knowledge in the technical field without departing from the technical ideas disclosed in the disclosure shall still be covered by the claims of the disclosure.

## Claims

1. A garden tool, comprising:
a connecting rod assembly;
a main body mounted to one end of the connecting rod assembly, the main body comprising:
a housing defining an oil storage cavity and a mounting groove adjacent to the oil storage cavity ,
a driving assembly disposed in the mounting groove , and
an oil supply assembly mounted on the housing, the oil supply assembly configured to draw lubricating oil from the oil storage cavity and deliver the lubricating oil to a lubricated portion of the garden tool; and
a sawing assembly, mounted on the housing and driven by the driving assembly to saw.

2. The garden tool according to claim 1, wherein the housing comprises a first housing, a second housing and a third housing, the mounting groove is provided on the first housing, the second housing is coupled to the first housing to define the oil storage cavity, and the third housing is coupled to the first housing on a side opposite the second housing and cooperates with the first housing to define a driving cavity.

3. The garden tool according to claim 2, wherein the oil supply assembly comprises an oil inlet and an oil outlet, the oil inlet and the oil outlet are integrally formed with the first housing, the oil inlet is located in the oil storage cavity, the oil outlet is located outside the first housing, and the oil supply assembly draws lubricating oil from the oil storage cavity and delivers the lubricating oil to the portion to be lubricated through the oil inlet and the oil outlet.

4. The garden tool according to claim 2, wherein the driving assembly comprises a driving motor, a first end of an output shaft of the driving motor extends through a bottom wall of the mounting groove and the third housing, a portion of the first end located in the driving cavity is rotatably coupled to the oil supply assembly, and an end portion of the first end located outside the third housing is rotatably coupled to the sawing assembly.

5. The garden tool according to claim 4, wherein the third housing defines an output hole, the output shaft extends through the third housing via the output hole, a dust-proof assembly is arranged inside the output hole, and the dust-proof assembly cooperates with the output shaft.

6. The garden tool according to claim 5, wherein the dust-proof assembly comprises a dust-proof pad and a mounting base, the mounting base is fixedly mounted inside the output hole, the dust-proof pad is fixedly mounted on the mounting base, and the dust-proof pad is configured to fill a gap between the output hole and the output shaft.

7. The garden tool according to claim 4, wherein an air guiding cover is detachably mounted on the first housing, and the air guiding cover is engaged with an opening of the mounting groove, the air guiding cover comprises an air guiding window, a plurality of heat dissipation fan blades is arranged at a second end of the output shaft, and an air outlet of the air guiding window is parallel to a rotation plane of the plurality of heat dissipation fan blades.

8. The garden tool according to claim 7, wherein the air guiding window is an involute air guiding window.

9. The garden tool according to claim 2, wherein an air inlet cavity is further arranged in the first housing, the air inlet cavity is located on a side of the mounting groove away from the oil storage cavity, the air inlet cavity is communicated with the mounting groove through the driving cavity, and a first air inlet is arranged on a wall of the air inlet cavity away from the driving cavity.

10. The garden tool according to claim 9, wherein the one end of the connecting rod assembly is secured to the first housing, the connecting rod assembly comprises a telescopic rod, a hollow rod cavity is arranged in the telescopic rod, the rod cavity is communicated with the air inlet cavity, and a second air inlet is disposed on a side wall of the telescopic rod.
